# EUROPEAN PATENT SPECIFICATION

(11) **EP 2 273 599 B1**
(45) Date of publication and mention of the grant of the patent: **13.04.2016**
(21) Application number: 09252730.8
(22) Date of filing: 04.12.2009
(51) Int. Cl.: H01M 10/04, H01M 10/0525, H01M 10/0587

(54) **Secondary battery and method of manufacturing**
Sekundärbatterie und Herstellungsverfahren dafür
Batterie secondaire et son procédé de fabrication

(30) Priority: 11.09.2009 US 241768 P; 08.07.2009 US 223857 P; 04.09.2009 US 554504; 25.11.2009 US 626157
(43) Date of publication of application: 12.01.2011
(73) Proprietor: Samsung SDI Co., Ltd., Gyeonggi-do (KR)
(72) Inventor: Kim, Daekyu, Yongin-si, Gyeonggi-do (KR)
(74) Representative: Mounteney, Simon James

(56) References cited:
- EP-A1- 1 717 879
- EP-A1- 2 019 442
- EP-A2- 1 804 320
- JP-A- 2001 273 933
- US-A1- 2006 251 962

## Description

### [TECHNICAL FIELD]

Embodiments relate to a secondary battery and a method of manufacturing the same.

### [BACKGROUND ART]

Generally, an electrode assembly together with an electrolyte is received into a can to form a secondary battery. The electrode assembly includes a positive electrode plate, a negative electrode plate, and a separator disposed between the positive and negative electrode plates.

Secondary batteries may be classified into a cylinder type secondary battery and a prismatic type secondary battery. In the cylinder type secondary battery, a cylindrical electrode assembly is received into a cylindrical can. The cylindrical electrode assembly received into the cylindrical can may be easily rotated or slipped relative to the cylindrical can due to external vibrations or impacts. Such relative movement may increase the internal resistance of the secondary battery and damage electrode tabs of the electrode assembly, and thus it is desirable to prevent the electrode assembly from being rotated or slipped relative to the cylindrical can.

US2006251962 discloses a secondary battery, including a jelly-roll shaped electrode assembly in which first and second electrode plates coated with active material layers having different polarities are wound together with a separator interposed therebetween, a fixing tape disposed around the jelly-roll shaped electrode assembly having a predetermined elasticity so as to maintain a winding state of the jelly-roll shaped electrode assembly, a case to receive the jelly-roll shaped electrode assembly, and a cap assembly to seal the case.

JP2001273933 discloses a cylindrical lithium-ion in which a wound group s formed by winding a positive electrode plate and negative electrode plate around a shaft core via a separator, and a sheet having a cubical expansion layer which has synthetic resin as the main component between the winding group and battery container is made to exist.

EP 1717879 discloses a battery including a battery case, an electrode assembly disposed in the battery case, the electrode assembly including a winding of a first electrode plate, a second electrode plate and a separator, wherein the separator is interposed between the first and second electrode plates, a cap assembly covering the battery case.

EP1804320 discloses an electrode assembly for a lithium ion secondary battery and a lithium ion secondary battery using the same. In a sealing tape attached to the outer circumference of the electrode assembly in order to prevent the wound electrode assembly from being unwound, the sealing tape is formed of the material having an affinity for the electrolyte to absorb the electrolyte and to swell or the external or internal surface of the conventional sealing tape is coated with such a material so that, when the sealing tape is impregnated with the electrolyte, the sealing tape swells to attach the electrode assembly and the can to each other and to thus prevent the welding parts of the electrode tabs

### [TECHNICAL PROBLEM]

Embodiments are directed to a method of manufacturing a secondary battery configured to prevent an electrode assembly from freely moving in a can.

### [TECHNICAL SOLUTION]

At least one of the above and other features and advantages may be realized by providing a method of manufacturing a secondary battery according to claim 1.

Preferred aspects of the invention are set out in claims 2 to 9.

According to the method of manufacturing the secondary battery, when the base sheet of the sealing tape contacts the electrolyte, the base sheet may lose its directionality, and thus is shrunk and deformed. As a result, a relatively thicker portion generated through the above-described process contacts the inner surface of the can to prevent the electrode assembly from being moved within the can.

According to the method of manufacturing the secondary battery, when the base sheet is shrunk, the base sheet is separated from the adhesive layer. At this time, the adhesive layer is maintained in a state in which the adhesive layer is attached to the electrode assembly to provide a certain adhesive force. Thus, although the base sheet of the sealing tape is shrunk, the remaining adhesive layer may provide the certain adhesive force to prevent the electrode assembly from being released.

### [BRIEF DESCRIPTION OF THE DRAWINGS]

FIG. 1 illustrates a perspective view of a secondary battery according to an embodiment.
FIG. 2 illustrates an exploded perspective view of the secondary battery of FIG. 1.
FIG.3 illustrates a longitudinal sectional view of the secondary battery of FIG. 1.
FIG. 4 illustrates a partially schematic cross-sectional view of the secondary battery of FIG. 1 before an electrolyte is injected into the secondary battery.
FIG. 5 illustrates a schematic perspective view of an electrode assembly of FIG. 1 after an electrolyte is injected into the secondary battery.
FIG. 6 illustrates a longitudinal sectional view of the secondary battery after an electrolyte is injected into the secondary battery.
FIG. 7 illustrates a schematic perspective view of a secondary battery before an electrode assembly contacts an electrolyte according to another embodiment.
FIG. 8 is a magnified photograph (x30) of an OPS film of Comparative Example 2 according to Experimental Example 3.
FIG. 9 is a magnified photograph (x30) of an OPS film of Example 1 according to Experimental Example 3.

### [DETAILED DESCRIPTION FOR CARRYING OUT THE INVENTION]

A secondary battery according to embodiments will now be described in detail with reference to the accompanying drawings.

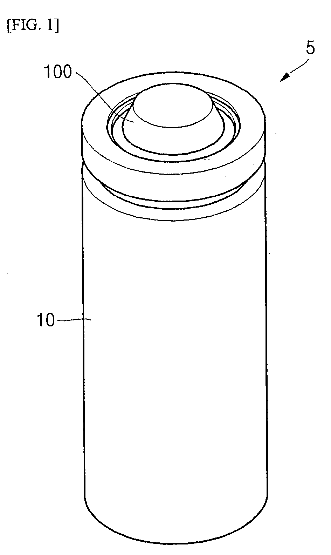

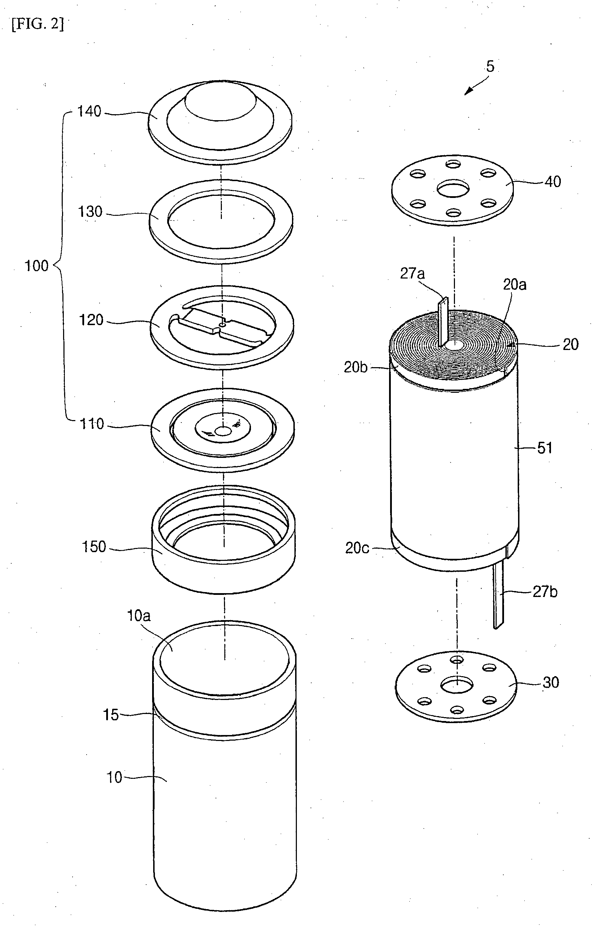

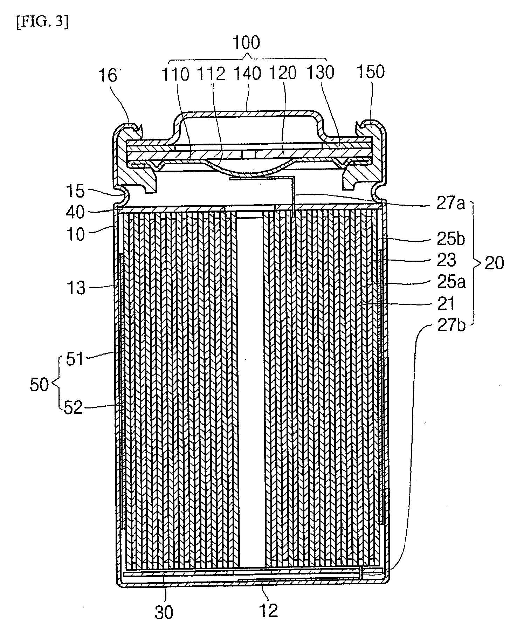

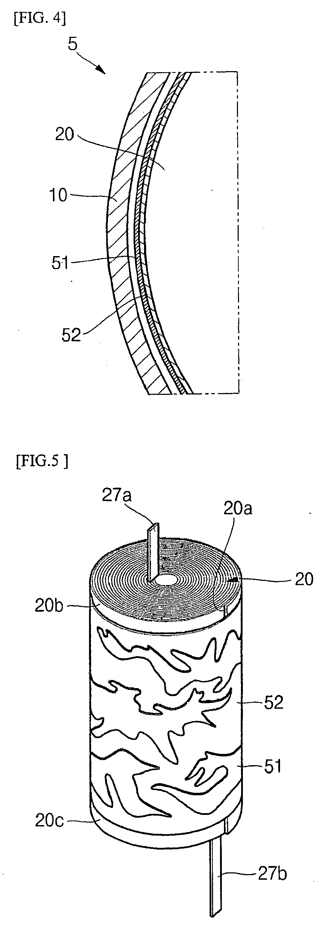

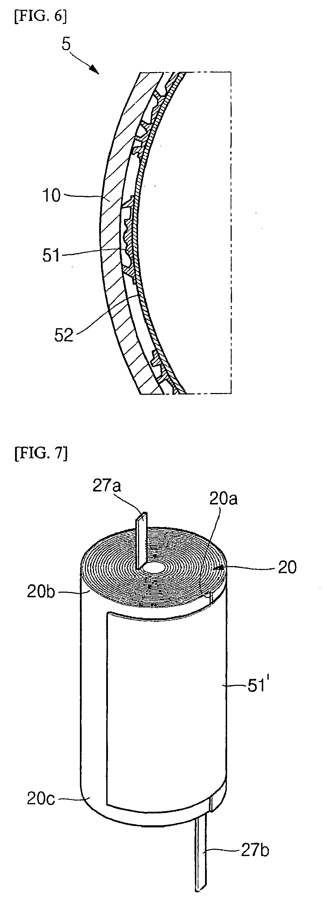

FIG. 1 illustrates a perspective view of a secondary battery according to an embodiment. FIG. 2 illustrates an exploded perspective view of the secondary battery of FIG. 1, and FIG. 3 illustrates a longitudinal sectional view of the secondary battery of FIG. 1. FIG. 4 illustrates a partially schematic cross-sectional view of the secondary battery of FIG. 1 before an electrolyte is injected into the secondary battery. FIG. 5 illustrates a schematic perspective view of an electrode assembly of FIG. 1 after an electrolyte is injected into the secondary battery. FIG. 6 illustrates a longitudinal sectional view of the secondary battery after an electrolyte is injected into the secondary battery.

Referring to FIGS. 1 to 6, a secondary battery 5 according to an embodiment includes a can 10, an electrode assembly 20, a lower insulating member 30, an upper insulating member 40, a sealing tape 50, an electrolyte, and a cap assembly 100.

The can 10 may have a cylindrical shape and be formed of a light conductive metal such as aluminum or an aluminum alloy. The can 10 may be manufactured using a machining process such as deep drawing.

The can 10 includes a circular bottom plate 12 and a cylindrical sidewall 13 extending from an edge of the circular bottom plate 12. A beading part 15 protruding inwardly along the periphery of the can 10 is formed on an upper portion of the sidewall 13. The beading part 15 prevents the lower insulating member 30, the electrode assembly 20, and the upper insulating member 40 from being moved from the inside of the can 10 toward a direction perpendicular to the bottom plate 12. A crimping part 16 is disposed on a top end of the sidewall 13. The crimping part 16 provides sealing between the can 10 and the cap assembly 100. An opening 10a is defined in a top portion of the sidewall 13 so that the lower insulating member 30, the electrode assembly 20, the upper insulating member 40, and the cap assembly 100 are sequentially inserted into the can 10 through the opening 10a.

The electrode assembly 20 includes a first electrode plate 21, a second electrode plate 23, a first separator 25a, and a second separator 25b. The electrode assembly 20 further includes a first electrode tab 27a and a second electrode tab 27b. The first electrode plate 21, the first separator 25a, the second electrode plate 23, and the second separator 25b are sequentially stacked, and then, cylindrically wound to form the electrode assembly 20.

In this embodiment, the first electrode plate 21 includes a positive electrode plate, and the second electrode plate 23 includes a negative electrode plate.

Although not shown in detail, the first electrode plate 21 that is the positive electrode plate includes a positive electrode collector and a positive electrode coating portion. The positive electrode collector may be formed of a conductive metal to collect electrons from the positive electrode coating portion and deliver the electrons to an external circuit. The positive electrode coating portion may be formed of a mixture of a positive electrode active material, a conductive material, and a binder. The positive electrode coating portion is coated on the positive electrode collector. First non-coating portions on which the positive electrode coating portion is not coated are disposed on both ends of a winding direction of the first electrode plate 21. The first electrode tab (positive electrode tab) 27a is coupled to one of the first non-coating portions using a method such as welding. The first electrode tab 27a extends from the inside of the can 10 toward the opening 10a.

Although not shown in detail, the second electrode plate 23 that is the negative electrode plate in this embodiment includes a negative electrode collector and a positive electrode coating portion. The negative electrode collector may be formed of a conductive metal to collect electrons from the negative electrode coating portion and deliver the electrons to an external circuit. The negative electrode coating portion may be formed of a mixture of a negative electrode active material, a conductive material, and a binder. The negative electrode coating portion is coated on the negative electrode collector. Second non-coating portions on which the negative electrode coating portion is not coated are disposed on both ends of a winding direction of the second electrode plate 23. The second electrode tab (negative electrode tab) 27b is coupled to one of the first non-coating portions using a method such as welding. The first electrode tab 27a extends from the inside of the can 10 toward the bottom plate 12. The second electrode tab 27b is coupled to the bottom plate 12 of the can 12 using a method such as welding. Thus, the can 10 has a negative polarity, and the bottom plate 12 of the can 10 is used as a negative terminal of the secondary battery 5.

The first and second separators 25a and 25b allow the first and second electrode plates 21 and 23 to be separated from each other. Fine pores are formed in the first and second separators 25a and 25b. As a result, lithium ions moving between the first and second electrode plates 21 and 23 can pass through the fine pores. Each of the first and second separators 25a and 25b may be formed of a polymer resin such as polyethylene (PE) and polypropylene (PP).

The lower insulating member 30 has an approximate disk shape to provide insulation between the electrode assembly 20 and the bottom plate 12 of the can 10. The upper insulating member 40 has an approximate disk shape to provide insulation between the electrode assembly 20 and the beading part 15 of the can 10.

The sealing tape 50 is attached to at least portion of an outer surface of the electrode assembly 20. The sealing tape 50 includes an adhesive layer 52 contacting an outer surface of the electrode assembly 20 and a base sheet 51 disposed on the adhesive layer 52 and formed of a material having directionality.

The sealing tape 50 is attached to the outer surface of the wound electrode assembly 20 to prevent the electrode assembly 20 from being unwound. That is, the electrode assembly 20 includes a finishing part 20a on the outer surface thereof. The outermost end of the second separator 25b is placed at the finishing part 20a. The sealing tape 50 is attached to the electrode assembly 20 in a manner such that the sealing tape 50 is wound around the outer surface of the electrode assembly 20 including the finishing part 20a. Therefore, it may prevent the electrode assembly 20 from being unwound.

The sealing tape 50 may be wound once around the outer surface of the electrode assembly 20 when the sealing tape 50 is attached to the outer surface of the electrode assembly 20. However, if necessary, the sealing tape 50 may be wound one or more times around the outer surface of the electrode assembly 20. Alternatively, the sealing tape 50 may be wound around only a portion of the electrode assembly 20 in the circumferential direction of the electrode assembly 20. For effectively preventing movement of the electrode assembly 20 relative to the can 10, the sealing tape 50 may be wound one or more times around the outer surface of the electrode assembly 20.

The sealing tape 50 is disposed between the outer surface of the electrode assembly 20 and the inner surface of the can 10. Here, a surface of the sealing tape 50 facing the inner surface of the can 10 may have low frictional resistance such that the electrode assembly 20 is easily inserted into the can 10.

In this embodiment, the base sheet 51 is a polymer film that can at least partially (partially, substantially or completely) lose its directionality when it contacts the electrolyte, and thus, the base sheet 51 may be shrunk and varied in shape. For example, when the polymer film contacts the electrolyte, a non-aqueous organic solvent of the electrolyte is permeated between molecules of the polymer film, and thus, the directionality of the polymer film, which is formed during the fabrication process of the polymer film, may be lost, and the polymer film is shrunk.. Herein, the term 'directionality' is used to denote the directionality of a material such as a film formed of a resin, which is caused during a manufacturing process such as uniaxial drawing, biaxial drawing, and compression.

When the directionality of the base sheet 51 is at least partially removed as described above, the base sheet 51 which is fabricated by drawing is deformed. By this deformation, the base sheet 51 includes a first region in which a thickness of at least portion of the base sheet 51 increases and a second region in which a thickness of at least portion of the base sheet 51 decreases when the base sheet 51 is shrunk by contacting the electrolyte. The first region in which the thickness of the base sheet 51 increases contacts an inner surface of the can 10. Thus, when the first region in which the thickness of the base sheet 51 increases contacts the inner surface of the can 10, a frictional force is generated to prevent the electrode assembly 20 from being freely moved. Therefore, in such embodiments of the invention, prior to contact with the electrolyte the base layer 51 is arranged to cover a first area of the outer surface of the adhesive layer 52. This could be the whole of the outer surface of the adhesive layer 52, or part of the outer surface of the adhesive layer 52. Contact with the electrolyte causes the base layer 51 to change shape such that the base layer shrinks 51 so to cover a second area of the outer surface of the adhesive layer, the second area being smaller than the first area. This shrinking of the base layer 51 to cover the second area of the adhesive layer causes first portions of the base layer to contact an inner surface of the can.

In other words, prior to contact with the electrolyte the base layer 51 is arranged to cover a first area of the outer surface of the adhesive layer, and in the presence of electrolyte the base layer is arranged to cover a second area of the outer surface of the adhesive layer 51, the second area being smaller than the first area.

Shrinkage of the base sheet 51 caused by an aging process of the secondary battery (hereinafter, simply referred to as a "shrinkage") may be about 40% or more, and particularly, range from about 40% to about 64%. The shrinkage is a resultant value measured after the base sheet 51 is left in a thermostat bath containing the non-aqueous organic solvent that loses the directionality of the base sheet 51 at about 60° for about 24 hours. The non-aqueous organic solvent will be described later. When the shrinkage of the base sheet 51 is less than 40% after the aging process of the secondary battery 5, the first region in which a thickness contacting the inner surface of the can 10 increases is relatively reduced. As a result, the movement preventing effect of the electrode assembly 20 may be reduced. Here, in the shrinkage of the base sheet 51, shrinkage in a transverse direction (TD) may be greater than that in a machine direction (MD). Substantially, the shrinkage in the MD may approach almost zero. In other words, contact with the electrolyte can cause the base layer to shrink greater in an axial direction than in the winding direction.

In order to obtain the base sheet 51 having shrinkage of about 40% to about 64%, a thermal shrinkage of the base sheet 51 in the TD may range from about 70% to about 50%, and a thermal shrinkage of the base sheet 51 in the MD may range from about 0% to about 5%, but are not limited thereto. Here, the thermal shrinkage is a resultant value measured after a film constituting the base sheet 51 is left in the thermostat bath at about 90° for about 10 seconds.

Since the base sheet 51 can be deformed according to the size of a battery, the base sheet 51 is not limited to a specific size. In some embodiments, the base sheet 51 may have a thickness ranging from about 20 µm to about 60 µm, but is not limited thereto. When the base sheet 51 has a thickness of less than about 20 µm, the movement preventing effect of the electrode assembly 20 may be reduced because it is difficult to secure a sufficient thickness due to the contact with the electrolyte. When the base sheet 51 has a thickness of greater than about 60 µm, an injection amount of the electrolyte may be reduced. Thus, it is difficult to obtain sufficient amount of the electrolyte.

As above-described, in some embodiments, the base sheet 51 loses its directionality, and thus is shrunk and deformed when the base sheet 51 contacts the electrolyte. Due to such deformation, the first region in which the film increases in thickness is formed. In the first region in which the film increases in thickness, the film may have a thickness ranging from about 20 µm to about 300 µm. When the thickness of the film is within the above range in the first region, the movement preventing effect of the electrode assembly may be maximized.

The base sheet 51 may be formed of any polymer film as long as the polymer film can at least partially lose its directionality formed during a fabrication process (such as uniaxial drawing, biaxial drawing, or compression), and thus change its shape (e.g. be shrunk and deformed) by contact with electrolyte. The base sheet 51 may include a polystyrene (PS) film, a polyamide film, a polyacrylonitrile film, a polyvinyl alcohol film, a polycarbonate film, a polyethylene vinyl acetate film, and an oriented polystyrene (OPS) film, which may be easily penetrated by the non-aqueous organic solvent of electrolyte because of its relatively large intermolecular distance.

Among the above-described films, a film having a thermal shrinkage characteristic under a temperature of about 50° or more may be used as the base sheet 51. When the film having the thermal shrinkage characteristic is used, the base sheet 51 may be significantly changed in thickness due to the thermal shrinkage in the aging process of typical processes of manufacturing the secondary battery 5. Thus, the base sheet 51 may further firmly contact the inner surface of the can 10 in the first region in which the thickness of the base sheet increases to efficiently prevent the electrode assembly 20 from being freely moved.

A shrinkable OPS film may be used as the base sheet 51. In this embodiment, an OPS film represents a general OPS film manufactured using an injection molding process. The shrinkable OPS film represents an OPS film manufactured using an elongation process. A shrinkable OPS film having shrinkage of about 40% or more has relatively high elongation. According to an embodiment, when a longitudinal elongation is over about 45%, and a transverse elongation is over about 210%, a shrinkable OPS film having shrinkage of about 40% or more may be obtained. The shrinkable OPS film having shrinkage within the above range may have a very uniform thickness when compared to the general OPS film manufactured using the injection molding process. Also, in the shrinkable OPS film having shrinkage within the above range, a foreign substance (a foreign substance of the OPS film used for this embodiment represents a gel) is reduced in thickness when compared to the general OPS film manufactured using the injection molding process. This is done because a gel thickness is conserved into a raw condition as it is in the OPS film manufactured using the injection molding process, but a gel thickness is reduced due to the elongation process in the OPS film manufactured using the elongation process.

The adhesive layer 52 is coated on the base sheet 51 and contacts the finishing part 20a formed on the outer surface of the wound electrode assembly 20.

The adhesive layer 52 may be formed of any adhesive material that is generally used for a sealing tape 50 in the related art and does not react with the electrolyte. For example, the adhesive layer 52 may be formed by coating the base sheet 51 with an acryl-based adhesive. The acryl-based adhesive may be an adhesive selected from the group consisting of poly methyl methacrylate (PMMA), poly ethyl methacrylate (PEMA), and poly butyl methacrylate (PBMA).

The adhesive layer 52 may be coated on the base sheet 51 using various coating methods known in the related art, and the thickness of the adhesive layer 52 may be varied. For example, the adhesive layer 52 may be coated to a thickness of about 1 µm to about 30 µm by coating the base sheet 51 with an adhesive through a knife coating process. However, the base sheet 51 may be coated to a different thickness using another coating method.

The sealing tape 50 may be attached to the electrode assembly 20 in a manner such that the entire width of the electrode assembly 20 is enclosed by the sealing tape 50. Alternatively, the sealing tape 50 may be attached to the electrode assembly 20 except for an upper end part 20b and a lower end part 20c of the outer surface of the electrode assembly 20 as shown in FIG. 2. An electrolyte may be permeated between the can 10 and the electrode assembly 20 through the upper end part 20b, and the electrolyte injected into a bottom of the can 10 may contact the electrode assembly 20 at the lower end part 20c. Therefore, when immersion of the electrode assembly 20 in the electrolyte is considered, the sealing tape 50 may be not attached to the upper end part 20b and the lower end part 20c. In this embodiment, the width of the sealing tape 50 is not limited to a specific value. However, the width of the sealing tape 50 may be equal to or greater than about 20% of the width of the electrode assembly 20. When the width of the sealing tape 50 may be less than about 20% of the width of the electrode assembly 20, it may be difficult to sufficiently prevent the electrode assembly 20 from moving freely.

Although not shown, if necessary, the sealing tape 50 may further sequentially include an auxiliary adhesive layer and an auxiliary base sheet between the base sheet 51 and the adhesive layer 52. Here, the base sheet 51 loses its directionality by contacting the electrolyte and is shrunk. Thus, at least portion of the base sheet 51 contacts the inner surface of the can 10, and the auxiliary adhesive layer is disposed below the base sheet 51. Also, the adhesive layer 52 contacts the outer surface of the electrode assembly 20, and the auxiliary base sheet is disposed between the adhesive layer 52 and the auxiliary adhesive layer. As described above, when the auxiliary adhesive layer and the auxiliary base sheet are further provided, it may efficiently prevent the electrode assembly from being released by deformation due to the shrinkage of the base sheet 51. Here, an olefin-based film used for a general sealing tape may be used as the auxiliary base sheet, and an adhesive having the same material as that of the adhesive layer 52 may be used as the auxiliary adhesive layer. In other words, the sealing tape can further comprise an auxiliary base layer arranged to prevent unwinding of the electrode assembly after the electrolyte has caused the directionality of the base layer to be reduced. In such a case, an auxiliary adhesive layer arranged to contact the outer surface of the electrode assembly, the auxiliary base layer is arranged to contact an outer surface of the auxiliary adhesive layer; and the adhesive layer is arranged to contact an outer surface of the auxiliary base layer.

Any electrolyte may be used as long as the electrolyte includes a non-aqueous organic solvent by which the base sheet 51 may be shrunk, and the directionality of a polymer film may be released. For example, the non-aqueous organic solvent may include carbonates. Examples of such carbonates include dimethyl carbonate (DMC), diethyl carbonate (DEC), dipropyl carbonate (DPC), methylpropylcarbonate (MPC), ethylpropyl carbonate (EPC), methylethyl carbonate (MEC), ethylene carbonate (EC), propylene carbonate (PC), and butylene carbonate (BC). The non-aqueous organic solvent may include a carbonate-based non-polar organic solvent. For example, the carbonate based non-polar organic solvent may include at least one of dimethyl carbonate (DMC), diethyl carbonate (DEC), and dipropyl carbonate (DPC). Such a carbonate based non-polar organic solvent may be easily permeated between molecules of a polymer such as polystyrene (PS) having a relatively large intermolecular distance, so that the directionality of the polymer can be easily released. The carbonate based non-polar organic solvent of the non-aqueous organic solvent, i.e., at least one of the DMC, DEC, and DPC may include about 10% to about 60% by weight of the total contents of the electrolyte. When the carbonate based non-polar organic solvent includes less than about 10% by weight of the total contents of the electrolyte, since the carbonate based non-polar organic solvent may not be easily permeated between molecules of the polymer film that is the base sheet 51, the shrinkage does not smoothly occur to reduce a movement preventing effect. Also, when the carbonate based non-polar organic solvent includes greater than about 60% by weight of the total contents of the electrolyte, it is difficult to obtain a further improved movement preventing effect.

Other electrolytes that are known in the related art except for the organic solvent may be used as the electrolyte according to an embodiment. That is, the non-aqueous organic solvent, specifically, the carbonate based non-polar organic solvent, specifically, any electrolyte including the DMC, the DEC, or the DPC may be used as the electrolyte according to an embodiment.

The cap assembly 100 is disposed between the crimping part 16 and the beading part 15. The cap assembly 100 includes a safety vent 110, a current interrupt device (CID) 120, a positive temperature coefficient (PTC) device 130, and a cap-up 140 that are disposed in this order away from the electrode assembly 20.

The safety vent 110 electrically connects the first electrode tab 27a and the CID 120. The safety vent 110 includes a protrusion 112 at a central portion thereof. The protrusion 112 is convex toward the electrode assembly 20 and electrically connected to the first electrode tab 27a. When the inside pressure of the secondary battery 5 exceeds a reference pressure, the protrusion 112 may be reversed. The CID 120 electrically connects the safety vent 110 and the PTC device 130. When the protrusion 112 is reversed due to an increased inside pressure of the secondary battery 5, the CID 120 may be broken so that the safety vent 110 and the PTC device 130 may be electrically disconnected.

The electric resistance of the PTC device 130 may increase steeply as the surrounding temperature increases. The PTC device 130 electrically connects the CID 120 and the cap-up 140. When the temperature of the secondary battery 5 increases excessively, the electric resistance of the PTC device 130 may increase greatly to interrupt the current flow.

The cap-up 140 is electrically connected to the PTC device 130 and exposed to the outside of the secondary battery 5. The cap-up 140 is used as a positive terminal of the secondary battery 5.

The cap assembly 100 is insulated from the can 10 by an insulating gasket 150. The insulating gasket 150 is disposed around the circumference of the cap assembly 100 and fixed to the inside of the can 10 by the beading part 15 and the crimping part 16.

The structure of the cap assembly shown in the drawings is an example structure provided for describing an embodiment of the invention. The structure of the cap assembly 100 can be variously changed. It will be apparent to those of ordinary skill in the art that the structure of the cap assembly shown in the drawings may be changed or modified without departing from the scope of the present invention as defined in the appended claims.

FIG. 7 illustrates a schematic perspective view of a secondary battery before an electrode assembly contacts an electrolyte according to another embodiment.

Referring to FIG. 7, a secondary battery includes an electrode assembly 20 and a sealing tape 50 including an adhesive layer 52 attached to at least portion of an outer surface of the electrode assembly 20 and contacting an external surface of the electrode assembly 20 and a base sheet 51 disposed on the adhesive layer 52 and formed of a material having directionality. Since the electrode assembly 20 and the sealing tape 50 have the same structure as those of the secondary battery 5 illustrated in FIGS. 1 to 6 except for winding degree of the sealing tape 50a, duplicated descriptions will be omitted. However, only the winding degree of the sealing tape 50a will be described in detail.

The sealing tape 50 is attached to the outer surface of the wound electrode assembly 20 to prevent the electrode assembly 20 from being unwound. That is, the electrode assembly 20 includes a finishing part 20a on the outer surface thereof. The outermost end of the second separator 25b is placed at the finishing part 20a. The sealing tape 50 is attached to the electrode assembly 20 in a manner such that the sealing tape 50 is wound around the outer surface of the electrode assembly 20 including the finishing part 20a. Therefore, it may prevent the electrode assembly 20 from being unwound.

Here, the sealing tape 50 may be wound to cover only a portion of a longitudinal direction of the outer surface of the electrode assembly 20 including the finishing part 20a on the outer surface of the electrode assembly 20. When considering the movement of the electrode assembly 20, the sealing tape 50 may be wound around a quarter or more of the outer surface of the electrode assembly 20 including the finishing part 20a on the outer surface of the electrode assembly 20. When the sealing tape 50 is wound around a quarter or less of the outer surface of the electrode assembly 20 including the finishing part 20a on the outer surface of the electrode assembly 20, it may be difficult to prevent the electrode assembly 20 from being unwound and moving freely within the can.

A method of manufacturing a secondary battery will now be described with reference to FIGS. 1 to 6.

A method of manufacturing a secondary battery 5 includes a preparation process, an assembly process, and an injection process.

In the preparation process, an electrode assembly 20, a sealing tape 50, and a can 10 are prepared. The electrode assembly 20 includes an external surface. The sealing tape 50 includes an adhesive layer 52 attached to at least portion of an outer surface of the electrode assembly 20 and contacting an external surface of the electrode assembly 20 and a base sheet 51 disposed on the adhesive layer 52 and formed of a material having directionality. The can 10 receives the electrode assembly 20 and the sealing tape 50. Since the components used in the preparation process are previously described above, their detailed descriptions will be omitted.

In the assembly process, the sealing tape 50 is attached to at least portion of the electrode assembly 20, and then, the electrode assembly 20 and the sealing tape 50 are inserted into the can 10.

The sealing tape 5 0 is disposed between the outer surface of the electrode assembly 20 and the inner surface of a can 10.

In the assembly process, the electrode assembly 20 to which the sealing tape 50 is attached is inserted in the can 10, and other components of a secondary battery 5 are assembled.

In detail, a lower insulating member 30, the electrode assembly 20 to which the sealing tape is attached, and an upper insulating member 40 are sequentially arranged from a lower side. In this state, a second electrode tab 27b of the electrode assembly 20 is coupled to a bottom plate 12 of the can 10 by a method such as welding. At this time, a beading part and a crimping part are not yet formed at the can 10. Next, the lower insulating member 30, the electrode assembly 20 to which the sealing tape 50 is attached, and the upper insulating member 40 are sequentially inserted into the can 10 through an opening 10a of the can 10. Thereafter, a beading part 15 is formed at a sidewall 13 of the can 10 so that the lower insulating member 30, the electrode assembly 20 to which the sealing tape 50 is attached, and the upper insulating member 40 may be stably held in the can 10 without movement substantially perpendicular to the bottom plate 12.

In the injection process, in this embodiment, the base sheet 51 loses its directionality by contacting an electrolyte, and thus is shrunk and deformed. The electrolyte is injected into the can 10 such that at least portion of the base sheet 51 contacts an inner surface of the can 10.

The electrolyte allows lithium ions generated by an electrochemical reaction in electrodes 25a and 25b when charged and discharged to be movable.

When the electrolyte is injected, the electrolyte contacts the base sheet 51 of the sealing tape 50 attached to the outer surface of the electrode assembly 20. At this time, a non-aqueous organic solvent of the electrolyte is penetrated between molecules due to the contact between the base sheet 51 and the electrolyte to lose the directionality applied to the base sheet 51 during a film fabrication process.

When the directionality is lost, the base sheet 51 is shrunk to form a first region in which at least portion of the base sheet 51 increases in thickness and a second region in which at least portion of the base sheet 51 decreases in thickness. The base sheet 51 contacts the inner surface of the can 10 in the first region in which at least portion of the base sheet 51 increases in thickness to prevent the electrode assembly 20 from being freely moved inside the can 10. In other words, prior to contact with the electrolyte the base layer 51 is arranged to cover a first area of the outer surface of the adhesive layer 52. Contact with the electrolyte causes the base layer 51 to change shape such that the base layer 51 shrinks so to cover a second area of the outer surface of the adhesive layer 52, the second area being smaller than the first area. The shrinking of the base layer 51 so to cover the second area of the adhesive layer causes first portions of the base layer 51 to contact an inner surface of the can. In some embodiments, in the presence of electrolyte the adhesive layer is arranged to substantially not deform.

Therefore, in some embodiments, in the presence of electrolyte, the base layer 51 comprises a plurality of first portions and a plurality of second portions, with the first portions being thicker than the second portions. In some embodiments, the base layer 51 may have a thickness in the range of about 20 µm to about 60 µm prior to contact with the electrolyte, and the first portions of the base layer 51 have a thickness ranging from about 20 µm to about 300 µm after contact with the electrolyte.

A finishing assembly process may be performed after the electrolyte is injected. An insulating gasket 150 is inserted through the opening 10a and placed on the beading part 15. Thereafter, a cap assembly 100 is placed inside the insulating gasket 150. Then, a crimping part 16 is formed on the upper end of the sidewall 13 so as to fix the insulating gasket 150 and the cap assembly 100.

After the secondary battery 5 is assembled in this way, a post-treatment operation such as a formation operation and an aging operation may be performed.

In the formation operation, the assembled secondary battery 5 may be repeatedly charged and discharged so as to activate the secondary battery 5. When the secondary battery 5 is charged, lithium ions moves from a lithium metal oxide used as a positive electrode to a carbon electrode used as a negative electrode. At this time, since lithium is highly reactive, the lithium ions react with the negative carbon electrode to produce reaction products such as Li2, CO3, LiO, and LiOH which form a film called solid electrolyte interface (SEI) on the surface of the carbon electrode.

In the aging operation, the secondary battery 5 may be allowed to sit for a predetermined time so as to stabilize the SEI film. For example, in the aging operation, the secondary battery 5 may be allowed to sit for about 18 hours to about 36 hours at about 50° to about 70°.

At this time, when the base sheet 51 having a thermal shrinkage characteristic is used, the base sheet 51 is left at a high temperature for a long time during the aging process. Thus, thermal shrinkage is additionally progressed to sufficiently shrink the base sheet 51 of the sealing tape 50. Due to the thermal shrinkage, the base sheet 51 of the sealing tape 50 is sufficiently deformed to form locally thicker parts, and thus movement of the electrode assembly 20 relative to the can 10 may be effectively prevented by the locally thicker parts of the base sheet 51.

The base sheet 51 is shrunk and deformed by contacting the electrolyte, and thus is separated from the adhesive layer 52 in parts. This is done because the base sheet 51 is significantly deformed to exert adhesion (detachable) characteristics of an adhesive, thereby being partially separated from the adhesive layer 52. Thus, the adhesive layer 52 is maintained in a state in which the adhesive layer 52 is attached to the electrode assembly 20. According to this embodiment, after the aging process is performed, the adhesive layer 52 has an adhesion force ranging from about 2 kgf/cm2 to about 9 kgf/cm2. When an adhesion force of the adhesive layer 52 remains after the aging process is performed, it may prevent the electrode assembly 20 from being released.

The adhesion force is obtained by measuring a force at a time point at which upper and lower ends of the secondary battery 5 are cut, and a push-pull gauge is disposed on the lower end of the secondary battery 5, and then, the push-pull gauge is pushed upwardly to move the electrode assembly 20.

Hereinafter, certain examples according to embodiments of the invention will be described. However, the present disclosure is not limited to such examples.

### <Example 1>

LiCoO2 used as a positive electrode active material, polyvinylidene fluoride (PVDF) used as a binder, and carbon used as a conductive material were mixed at a weight ratio of 92:4:4, and the mixture was dispersed in N-methyl-2-pyrrolidone so as to form a positive electrode slurry. The positive electrode slurry was coated with an aluminium foil having a thickness of about 20 µm and was dried and rolled to form a positive electrode.

Artificial graphite used as a negative electrode active material, styrene-butadiene rubber used as a binder, and carboxymethylcellulose used as a thickener were mixed at a weight ratio of 96:2:2, and the mixture was dispersed in water so as to form a negative electrode slurry. A copper foil having a thickness of about 15 µm was coated with the negative electrode slurry and was dried and rolled to form a negative electrode.

A polyethylene/polypropylene porous film (Hoest Cellanese, U.S.) having a thickness of 20 µm was used as a separator. The separator was placed between the cathode and the anode. Then, the separator, the cathode, and the anode were wound, and a sealing tape was wound around them to manufacture an electrode assembly.

A 35 µm (±0.03 µm) thickness shrinkable polystyrene (OPS) film (elongation: TD 45%, MD 210%, shrinkage: 52%, thermal shrinkage: TD 66%, MD 5%) coated with a 15 µm thickness poly methyl methacrylate (PMMA) adhesive was used as the sealing tape.

The electrode assembly wound by a jelly-roll method was inserted in a cylindrical aluminum battery case, and non-aqueous electrolyte was injected into the case. Then, the case was sealed. In this way, a secondary battery was fabricated.

Here, a mixture organic solvent of ethylene carbonate (EC), dimethyl carbonate (DMC), propylene carbonate (PC), and flurorobenzene (FB) (volumetric ratio of EC:DMC:PC:FB was 30:55:5:10), in which 1.1 M of LiPF6 was dissolved, was used as the non-aqueous electrolyte.

### <Comparison Example 1>

Comparison Example 1 was performed using the same method as Example 1 except that the PP film coated with the 15 µm thickness PMMA adhesive was used as the sealing tape.

### <Comparison Example 2>

The 35 µm OPS film coated with the 15 µm thickness PMMA adhesive was used as the sealing tape.

### <Experimental Example 1> Measurement of movement

Movement of a secondary battery manufactured in Example 1 and Comparison Example 1 was measured using a drum test method, and the results were shown in Table 1 and Table 2. A long diameter of the electrode assembly of Example 1 was 17.03, and a long diameter of Comparison Example 1 was 17.19. Here, 18 secondary battery samples were respectively used for measuring the long diameters in Example 1 and Comparison Example 1.

In the drum test method, the secondary battery was disposed within a drum, and a vibration (66 RPM) was applied. At this time, a change of an internal resistance (IR) of the secondary battery per unit time was measured. If an increase of the IR exceeds 110% when compared to an initial IR, it was determined to be inconsistent. The more time it takes to obtain a determination of defectiveness from the drum test, the internal movement of the secondary battery was reduced. The movement preventing effect was confirmed through the drum test results.

**[Table 1]**

| | | Initial time | 100 min | | 120 min | | 140 min | | 160 min | |
|---|---|---|---|---|---|---|---|---|---|---|
| | | IR | IR | increase | IR | increase | IR | increase | IR | increase |
| Example 1 | 1 | 12.0 | 12.5 | 104% | 12.3 | 103% | 12.3 | 103% | 0.0 | - |
| | 2 | 11.9 | 12.6 | 106% | 12.2 | 103% | 12.6 | 106% | 0.0 | - |
| | 3 | 12.2 | 12.6 | 103% | 12.3 | 101% | 12.4 | 102% | 0.0 | - |
| | 4 | 11.9 | 12.3 | 103% | 12.3 | 103% | 12.1 | 102% | 0.0 | - |
| | 5 | 11.9 | 12.3 | 103% | 12.2 | 103% | 12.3 | 103% | 0.0 | - |
| | 6 | 11.9 | 12.3 | 103% | 12.3 | 103% | 12.3 | 103% | 0.0 | - |
| | 7 | 12.3 | 13.5 | 110% | 12.7 | 103% | 13.1 | 107% | 0.0 | - |
| | 8 | 12.3 | 12.9 | 105% | 12.8 | 104% | 12.8 | 104% | 0.0 | - |
| | 9 | 12.3 | 13.0 | 106% | 12.8 | 104% | 12.9 | 105% | 0.0 | - |
| | 10 | 12.3 | 12.8 | 104% | 12.8 | 104% | 12.8 | 104% | 0.0 | - |
| | 11 | 12.0 | 12.8 | 107% | 12.5 | 104% | 12.8 | 107% | 0.0 | - |
| | 12 | 11.9 | 12.5 | 105% | 12.4 | 104% | 12.1 | 102% | 0.0 | - |
| | 13 | 12.3 | 12.8 | 104% | 12.7 | 103% | 13.0 | 106% | 0.0 | - |
| | 14 | 12.0 | 12.8 | 107% | 12.3 | 103% | 12.5 | 104% | 0.0 | - |
| | 15 | 12.3 | 12.8 | 104% | 13.0 | 106% | 12.4 | 101% | 0.0 | - |
| | 16 | 12.0 | 12.8 | 107% | 12.4 | 103% | 12.8 | 107% | 0.0 | - |
| | 17 | 12.0 | 12.7 | 106% | 12.8 | 107% | 12.5 | 104% | 0.0 | - |
| | 18 | 12.0 | 12.6 | 105% | 12.3 | 103% | 12.7 | 106% | 0.0 | - |

**[Table 2]**

| | | Initial time | 60 min | | 80 min | | 100 min | |
|---|---|---|---|---|---|---|---|---|
| | | IR | IR | increase | IR | increase (%) | IR | increase |
| Comparison Example 1 | 1 | 16.2 | 17.3 | 107% | 0.0 | - | - | - |
| | 2 | 16.2 | 16.8 | 104% | 0.0 | - | - | - |
| | 3 | 16.6 | 17.6 | 106% | 17.3 | 104% | 17.1 | 103% |
| | 4 | 16.3 | 17.3 | 106% | 17.3 | 106% | 17.3 | 106% |
| | 5 | 16.0 | 16.8 | 105% | 0.0 | - | - | - |
| | 6 | 16.0 | 16.7 | 104% | 16.7 | 104% | 0.0 | - |
| | 7 | 15.7 | 16.8 | 107% | 16.9 | 108% | 17.2 | 110% |
| | 8 | 15.5 | 16.2 | 105% | 16.4 | 106% | 0.0 | - |
| | 9 | 15.6 | 16.5 | 106% | 0.0 | - | - | - |
| | 10 | 15.4 | 16.3 | 106% | 16.3 | 106% | 0.0 | - |
| | 11 | 15.4 | 16.6 | 108% | 16.7 | 108% | 0.0 | - |
| | 12 | 15.3 | 16.3 | 107% | 16.3 | 107% | 16.8 | 110% |
| | 13 | 15.1 | 0.0 | - | - | - | - | - |
| | 14 | 15.7 | 16.5 | 105% | 0.0 | - | - | - |
| | 15 | 15.8 | 16.1 | 102% | 0.0 | - | - | - |
| | 16 | 15.6 | 16.2 | 104% | 0.0 | - | - | - |
| | 17 | 15.6 | 16.1 | 103% | 0.0 | - | - | - |
| | 18 | 15.4 | 16.2 | 105% | 0.0 | - | - | - |

As shown in Table 1 and Table 2, in the case of Comparison Example 1 to which the PP film is applied, according to the drum test, defectiveness occurs at about 60 min. However, in the case of Example 1 to which the shrinkable OPS film is applied, it can be observed that the drum test passed at about 140 min. Thus, it can be observed that the secondary battery to which the shrinkable OPS film according to the embodiments is applied has a significantly improved movement preventing effect when compared to Comparison Example 1 to which the existing general film is applied.

### <Experimental Example 2> Measurement of thickness uniformity

To confirm thickness uniformity of the shrinkable OPS film of Example 1 and the OPS film of Comparison Example 2, thicknesses were measured at a certain position to obtain standard deviation, and the results were shown in Table 3. For reference, the thickness of the OPS film of Comparison Example 2 was measured using two textile samples.

**[Table 3]**

| | Comparison Example 2 | | Example 1 |
|---|---|---|---|
| Measurement Number | A: thickness | B: thickness | thickness |
| 1 | 0.028 | 0.033 | 0.040 |
| 2 | 0.031 | 0.03 | 0.038 |
| 3 | 0.029 | 0.027 | 0.039 |
| 4 | 0.027 | 0.028 | 0.039 |
| 5 | 0.026 | 0.029 | 0.039 |
| 6 | 0.029 | 0.026 | 0.041 |
| 7 | 0.027 | 0.029 | 0.039 |
| 8 | 0.026 | 0.028 | 0.039 |
| 9 | 0.026 | 0.025 | 0.040 |
| 10 | 0.029 | 0.033 | 0.040 |
| 11 | 0.03 | 0.026 | 0.040 |
| 12 | 0.03 | 0.027 | 0.040 |
| 13 | 0.028 | 0.031 | 0.040 |
| 14 | 0.026 | 0.03 | 0.041 |
| 15 | 0.025 | 0.026 | 0.039 |
| 16 | 0.029 | 0.028 | 0.039 |
| 17 | 0.027 | 0.03 | 0.039 |
| 18 | 0.027 | 0.025 | 0.038 |
| 19 | 0.031 | 0.026 | 0.040 |
| 20 | 0.031 | 0.025 | 0.040 |
| 21 | 0.029 | 0.032 | 0.041 |
| 22 | 0.03 | 0.031 | 0.038 |
| 23 | 0.028 | 0.028 | 0.038 |
| 24 | 0.026 | 0.026 | 0.039 |
| 25 | 0.027 | 0.028 | 0.039 |
| 26 | 0.028 | 0.025 | 0.039 |
| 27 | 0.026 | 0.027 | 0.040 |
| 28 | 0.028 | 0.028 | 0.041 |
| 29 | 0.028 | 0.026 | 0.040 |
| 30 | 0.03 | 0.031 | 0.040 |
| 31 | 0.031 | 0.028 | 0.041 |
| 32 | 0.031 | 0.028 | 0.042 |
| 33 | 0.029 | 0.03 | 0.042 |
| 34 | 0.026 | 0.031 | 0.041 |
| 35 | 0.025 | 0.025 | 0.040 |
| 36 | 0.028 | 0.027 | 0.039 |
| 37 | 0.027 | 0.028 | 0.039 |
| 38 | 0.026 | 0.026 | 0.040 |
| 39 | 0.03 | 0.025 | 0.040 |
| 40 | 0.031 | 0.026 | 0.039 |
| 41 | 0.028 | 0.031 | 0.040 |
| 42 | 0.03 | 0.03 | 0.041 |
| 43 | 0.029 | 0.028 | 0.041 |
| 44 | 0.028 | 0.028 | 0.040 |
| 45 | 0.026 | 0.027 | 0.038 |
| 46 | 0.029 | 0.026 | 0.039 |
| 47 | 0.027 | 0.028 | 0.039 |
| 48 | 0.028 | 0.029 | 0.038 |
| 49 | 0.028 | 0.026 | 0.038 |
| 50 | 0.031 | 0.03 | 0.039 |
| 51 | 0.031 | 0.027 | 0.040 |
| 52 | 0.031 | 0.027 | 0.041 |
| 53 | 0.027 | 0.029 | 0.040 |
| 54 | 0.027 | 0.029 | 0.040 |
| 55 | 0.026 | 0.026 | 0.041 |
| 56 | 0.027 | 0.028 | 0.040 |
| 57 | 0.028 | 0.03 | 0.040 |
| 58 | 0.027 | 0.025 | 0.040 |
| 59 | 0.031 | 0.027 | 0.038 |
| 60 | 0.031 | 0.025 | 0.039 |
| Average | 0.028 | 0.028 | 0.04 |
| standard deviation | 0.00182 | 0.00213 | 0.00102 |

As shown in Table 3, it can be observed that the shrinkable OPS film has superior thickness uniformity.

### <Experimental example 3>Confirmation of Foreign Substances

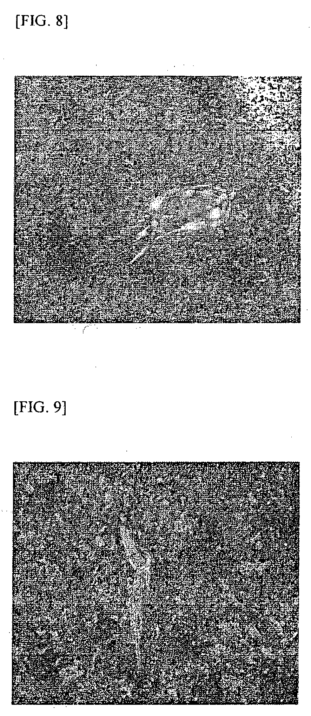

Magnified photographs (x30) of OPS films of Example 1 and Comparative Example 2 were analyzed, and analysis results are shown in FIG. 8 (OPS film of Comparative Example 2) and FIG. 9 (shrinkable OPS film of Example 1).

As shown in FIGS. 8 and 9, it can be observed that a size of a foreign substance is small in the shrinkable OPS film of Example 1 according to the present invention. A gel size of the shrinkable OPS film of Example 1 is in the range of 0.5 mm to 1 mm, and a gel size of the shrinkable OPS film of Comparative Example 2 is in the range of 0.5 mm to 15 mm. In particular, measurement results of thicknesses of the foreign substances showed that the gel thickness of the shrinkable OPS film of Example 1 was 4 µm, and the gel thickness of the OPS film of Comparative Example 2 was 45 µm.

### <Experimental example 3>Confirmation of Adhesive Force

Adhesive forces of electrode assemblies of secondary batteries in Example 1 and Comparative Example 2 were measured, and results are shown in Table 4. The adhesive forces were measured in such a way that upper and lower parts of the prepared secondary cell were cut, a push-pull gauge was then placed at the lower part, and thereafter a force was measured at the timing when the electrode assembly was shifted by pushing the push-pull gauge in an upper direction.

**[Table 4]**

| Example 1 | | Comparative Example 2 | |
|---|---|---|---|
| Long Diameter | Adhesive Force (kgf/cm²) | Long Diameter | Adhesive Force (kgf/cm²) |
| 17.09 | 5.0 | 17.20 | 4 |
| 17.08 | 6.0 | 17.05 | 3 |
| 17.07 | 9.0 | 17.04 | 2.8 |
| 17.05 | 7.0 | 17.03 | 1.7 |
| 17.02 | 2.4 | 17.00 | 2.7 |
| 17.00 | 5.3 | | |
| 16.95 | 2.7 | | |

As shown in Table 4 above, it can be confirmed that Example 1 employing the OPS film according to the present invention is much more excellent than the OPS film of Comparative Example 2 even though both of them have similar long diameters (for example, see adhesive forces at the long diameter of 17.05).

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A method of manufacturing a secondary battery, comprising:
providing an electrode assembly (20);
attaching a sealing tape (50) to the electrode assembly so that the sealing tape (50) at least partially extends around an outer surface of the electrode assembly (20) in a winding direction, the sealing tape (50) comprising a base layer (51) and an adhesive layer (52), with the base layer (51) formed on an outer surface of the adhesive layer (52);
placing the electrode assembly (20) in a can (20) arranged to house the electrode assembly (20); and
providing electrolyte to the electrode assembly (20),
wherein, prior to contacting with the electrolyte, the base layer (51) covers a first area of the outer surface of the adhesive layer (52); said method **characterised in that** the contact with the electrolyte causes the base layer (51) to change shape such that the base layer (51) shrinks so to cover a second area of the outer surface of the adhesive layer (52), the second area being smaller than the first area; and wherein the shrinking of the base layer (51) causes portions of the base layer (51) to contact an inner surface of the can (10).

2. A method of manufacturing a secondary battery according to Claim 1, wherein the contact with the electrolyte causes the base layer (51) to shrink greater in an axial direction than in the winding direction.

3. A method of manufacturing a secondary battery according to Claim 1 or 2, wherein the contact with the electrolyte causes the base layer (51) to shrink by 40% to 64%..

4. A method of manufacturing a secondary battery according to any one of the preceding claims, wherein the contact with the electrolyte causes the base layer (51) to shrink by 50% to 70% in the axial direction and 0% to 5% in the winding direction.

5. A method of manufacturing a secondary battery according to any one of the preceding claims, wherein the base layer (51) has a thickness in the range of 20 µm to 60 µm prior to contact with the electrolyte, wherein the first portions of the base layer (51) have a thickness ranging from 20 µm to 300 µm.

6. A method of manufacturing a secondary battery according to any one of the preceding claims, further comprising performing at least one of a formation process and an aging process, wherein optionally the aging process is performed by exposing the assembled battery to an environment having a temperature from 50 °C to 70 °C for 18 hours to 36 hours.

7. A method of manufacturing a secondary battery according to any one of the preceding claims, wherein the base layer (51) is a shrinkable polymer film, wherein optionally the base layer comprises any one or combination of oriented polystyrene, polystyrene (PS), polyamide, polyacrylonitrile, polyvinyl alcohol, polycarbonate, or polyethylene vinyl acetate.

8. A method of manufacturing a secondary battery according to any one of the preceding claims, wherein the electrolyte includes a non-polar organic solvent, wherein optionally the non-polar organic solvent includes carbonate, optionally one or more of dimethyl carbonate (DMC) electrolyte, diethyl carbonate (DEC), dipropyl carbonate (DPC).

9. A method of manufacturing a secondary battery according to Claim 8, wherein the electrolyte comprises 10% to 60% by weight of a carbonate solvent as the non-polar organic solvent.

## Patentansprüche

1. Verfahren zum Herstellen einer Sekundärbatterie, umfassend:
Bereitstellen einer Elektrodengruppe (20);
Befestigen eines Dichtungsbandes (50) auf der Elektrodengruppe, sodass das Dichtungsband (50) sich zumindest teilweise um eine Außenfläche der Elektrodengruppe (20) in einer Wickelrichtung erstreckt, wobei das Dichtungsband (50) eine Grundschicht (51) und eine Klebeschicht (52) umfasst, wobei die Grundschicht (51) auf einer Außenfläche der Klebeschicht (52) gebildet ist;
Setzen der Elektrodengruppe (20) in eine Büchse (20), welche zum Aufnehmen der Elektrodengruppe (20) ausgebildet ist; und
Bereitstellen eines Elektrolyten für die Elektrodengruppe (20),
wobei, vor dem Kontaktieren mit dem Elektrolyten, die Grundschicht (51) einen ersten Bereich der Außenfläche der Klebeschicht (52) abdeckt; wobei das Verfahren **dadurch gekennzeichnet ist, dass** das Kontaktieren des Elektrolyten eine Formänderung der Grundschicht (51) verursacht, sodass die Grundschicht (51) schrumpft, wodurch sie einen zweiten Bereich der Außenfläche der Klebeschicht (52) abdeckt, wobei der zweite Bereich kleiner als der erste Bereich ist;
und wobei das Schrumpfen der Grundschicht (51) den Kontakt zwischen Teilen der Grundschicht (51) und einer Innenfläche der Büchse (10) verursacht.

2. Verfahren zum Herstellen einer Sekundärbatterie nach Anspruch 1, wobei der Kontakt mit dem Elektrolyten ein Schrumpfen der Grundschicht (51) verursacht, welches in einer axialen Richtung größer als in einer Wickelrichtung ist.

3. Verfahren zum Herstellen einer Sekundärbatterie nach Anspruch 1 oder 2, wobei der Kontakt mit dem Elektrolyten ein Schrumpfen der Grundschicht (51) um 40% bis 64% verursacht.

4. Verfahren zum Herstellen einer Sekundärbatterie nach einem der vorhergehenden Ansprüche, wobei der Kontakt mit dem Elektrolyten ein Schrumpfen der Grundschicht (51) um 50% bis 70% in der axialen Richtung und um 0% bis 5% in der Wickelrichtung verursacht.

5. Verfahren zum Herstellen einer Sekundärbatterie nach einem der vorhergehenden Ansprüche, wobei die Grundschicht (51) eine Dicke im Bereich zwischen 20 µm und 60 µm vor dem Kontaktieren mit dem Elektrolyten aufweist, wobei die ersten Teile der Grundschicht (51) eine Dicke im Bereich zwischen 20 µm und 300 µm aufweisen.

6. Verfahren zum Herstellen einer Sekundärbatterie nach einem der vorhergehenden Ansprüche, ferner umfassend das Durchführen zumindest eines von einem Formationsprozess und einem Alterungsprozess, wobei der Alterungsprozess optional durch Aussetzen der zusammengebauten Batterie einer Umgebung mit einer Temperatur zwischen 50°C und 70°C für 18 bis 36 Stunden durchgeführt wird.

7. Verfahren zum Herstellen einer Sekundärbatterie nach einem der vorhergehenden Ansprüche, wobei die Grundschicht (51) eine schrumpfbare Polymerfolie ist, wobei die Grundschicht optional eines oder eine Kombination von orientiertem Polystyren, Polystyren (PS), Polyamid, Polyacrylnitril, Polyvinylalkohol, Polycarbonat, oder Polyethylenvinylazetat umfasst.

8. Verfahren zum Herstellen einer Sekundärbatterie nach einem der vorhergehenden Ansprüche, wobei der Elektrolyt ein nicht-polares organisches Lösungsmittel umfasst, wobei das nicht-polare organische Lösungsmittel optional Carbonat, optional eines oder mehrere von Dimethylcarbonat-(DMC)-Elektrolyt, Diethylcarbonat (DEC), Dipropylcarbonat (DPC) umfasst.

9. Verfahren zum Herstellen einer Sekundärbatterie nach Anspruch 8, wobei der Elektrolyt zwischen 10 Gew.-% und 60 Gew.-% eines Carbonat-Lösungsmittels als das nicht-polare organische Lösungsmittel umfasst.

## Revendications

1. Procédé de fabrication d'une batterie secondaire, comprenant les étapes consistant à:
fournir un ensemble formant électrode (20) ;
fixer un ruban d'étanchéité (50) sur l'ensemble formant électrode de telle manière que le ruban d'étanchéité (50) s'étend au moins partiellement autour d'une surface extérieure de l'ensemble formant électrode (20) dans une direction d'enroulement, le ruban d'étanchéité (50) comprenant une couche de base (51) et une couche adhésive (52), la couche de base (51) étant formée sur une surface extérieure de la couche adhésive (52) ;
placer l'ensemble formant électrode (20) dans un boitier (20) agencé pour héberger l'ensemble formant électrode (20) ; et
fournir de l'électrolyte à l'ensemble formant électrode (20),
dans lequel, préalablement à une mise en contact avec l'électrolyte, la couche de base (51) recouvre une première zone de la surface extérieure de la couche adhésive (52) ; ledit procédé étant **caractérisé en ce que** le contact avec l'électrolyte amène la couche de base (51) à changer de forme de telle manière que la couche de base (51) se rétracte de manière à recouvrir une deuxième zone de la surface extérieure de la couche adhésive (52), la deuxième zone étant plus petite que la première zone ;
et dans lequel la rétraction de la couche de base (51) amène des parties de la couche de base (51) à venir en contact avec une surface intérieure du boitier (10).

2. Procédé de fabrication d'une batterie secondaire selon la revendication 1, dans lequel le contact avec l'électrolyte amène la couche de base (51) à se rétracter davantage dans une direction axiale que dans la direction d'enroulement.

3. Procédé de fabrication d'une batterie secondaire selon la revendication 1 ou 2, dans lequel le contact avec l'électrolyte amène la couche de base (51) à se rétracter à raison de 40 % à 64 %.

4. Procédé de fabrication d'une batterie secondaire selon l'une quelconque des revendications précédentes, dans lequel le contact avec l'électrolyte amène la couche de base (51) à se rétracter à raison de 50 % à 70 % dans la direction axiale et à raison de 0 % à 5 % dans la direction d'enroulement.

5. Procédé de fabrication d'une batterie secondaire selon l'une quelconque des revendications précédentes, dans lequel la couche de base (51) présente une épaisseur dans la plage de 20 µm à 60 µm préalablement à un contact avec l'électrolyte, les premières parties de la couche de base (51) présentant une épaisseur comprise entre 20 µm et 300 µm.

6. Procédé de fabrication d'une batterie secondaire selon l'une quelconque des revendications précédentes, comprenant en outre une étape consistant à mettre en oeuvre au moins un procédé parmi un procédé de formation et un procédé de vieillissement, le procédé de vieillissement étant éventuellement mis en oeuvre par exposition de la batterie assemblée à un environnement présentant une température comprise entre 50°C et 70°C pendant 18 heures à 36 heures.

7. Procédé de fabrication d'une batterie secondaire selon l'une quelconque des revendications précédentes, dans lequel la couche de base (51) est un film polymère rétractable, la couche de base comprenant éventuellement l'un quelconque parmi, ou une combinaison de, polystyrène orienté, polystyrène (PS), polyamide, polyacrylonitrile, alcool polyvinylique, polycarbonate, ou acétate de polyéthylène-vinyle.

8. Procédé de fabrication d'une batterie secondaire selon l'une quelconque des revendications précédentes, dans lequel l'électrolyte comprend un solvant organique non polaire, le solvant organique non polaire comprenant éventuellement un carbonate, éventuellement un ou plusieurs parmi un électrolyte au carbonate de diméthyle (DMC), un carbonate de diéthyle (DEC), un carbonate de dipropyle (DPC).

9. Procédé de fabrication d'une batterie secondaire selon la revendication 8, dans lequel l'électrolyte comprend entre 10 % et 60 % en poids d'un solvant carbonate en tant que solvant organique non polaire.
